# EUROPEAN PATENT SPECIFICATION

(11) **EP 2 695 491 B1**
(45) Date of publication and mention of the grant of the patent: **09.10.2019**
(21) Application number: 13759111.1
(22) Date of filing: 10.05.2013
(51) Int. Cl.: H05B 37/02, H05B 39/04, H05B 33/08

(54) **TRAILING-EDGE-PHASE-CONTROLLED LIGHT MODULATING CIRCUIT**
PHASENGESTEUERTE AUSTRITTSKANTEN-LICHTMODULATIONSSCHALTUNG
CIRCUIT DE MODULATION DE LUMIÈRE COMMANDÉ EN PHASE DE BORD DE FUITE

(30) Priority: 17.05.2012 CN 201220222572 U
(43) Date of publication of application: 12.02.2014
(73) Proprietor: Cheng, Yung Pun, Kowloon, Hong Kong (CN)
(72) Inventor: Cheng, Yung Pun, Kowloon, Hong Kong (CN)
(74) Representative: Patentanwälte Walther Hinz Bayer PartGmbB
(86) International application number: PCT/CN2013/075476
(87) International publication number: WO 2013/170727

(56) References cited:
- WO-A1-2011/128798
- CN-A- 1 288 348
- CN-A- 101 176 386
- CN-U- 201 986 220
- CN-U- 202 617 436
- FR-A1- 2 952 766
- US-A1- 2007 001 654
- US-A1- 2011 193 490
- US-A1- 2012 033 471

## Description

### TECHNICAL FIELD

The present invention relates to a single pole two-wire system phase control trailing edge light modulating circuit, comprising: a full-bridge rectification circuit, a power supply circuit, a light-modulating control circuit, a voltage detection circuit and an active switch; wherein the full-bridge rectification circuit has one input terminal connected to a live wire and the other input terminal connected to a light-emitting load which is further connected to a neutral wire; the power supply circuit, the voltage detection circuit and the active switch are all connected in parallel between a positive output terminal and a negative output terminal of the full-bridge rectification circuit ; three inputs of the light-modulating control circuit are connected to the negative output terminal of the full-bridge rectification circuit, to an output terminal of the power supply circuit, and to an output terminal of the voltage detection circuit, respectively; and an output terminal of the light-modulating control circuit is connected to the input terminal of the active switch.

### BACKGROUND

Most of the existing leading-edge light bulb dimming circuitries use triad to control the phase of supply voltage, this always produce large surge current spikes, thus has a poor applicability in capacitive impedance LED lamps, electronic spotlights, electronic ballast controlled fluorescent lamps, and electronic energy-saving lamps, etc..

Most of the existing trailing-edge light bulb dimmers use 2 input and 2 output wires (4 wires) system (diagrams 1 and 2), which makes the installation more complicated due to additional wires need to be connected. For example, an indoor electrical junction box generally provides one live wire and one neutral wire for connecting to lighting loads, therefore, if a three-wire or four-wire system is to be installed, an additional wires need to be provided, and the original electrical wiring will need to be changed, which results in increased labor and material costs.

Chinese patent application No. 00125744.7 disclosed a trailing-edge-phase-controlled four-wire system light bulb dimmer. Chinese patent application No. 201120003889.0 disclosed a two-wire system trailing edge dimmer, in which the triggering circuit and the power supply circuit are connected together. The dimming adjustment not only change the output voltage, it also changes the voltage level of the supply voltage. Therefore, there is a requirement for further improvement.

US 2012/0033471 A1 discloses a two-wire load control device such as, a dimmer switch for controlling the amount of power delivered from an AC power source to an electrical load such as, a high-efficiency lighting load includes a thyristor coupled between the source and the load, a gate coupling circuit coupled between a first main load terminal and the gate of the thyristor, and a control circuit coupled to a control input of the gate coupling circuit. The control circuit generates a drive voltage for causing the gate coupling circuit to conduct a gate current to thus render the thyristor conductive at a firing time during a half cycle of the AC power source, and to allow the gate coupling circuit to conduct the gate current at any time from the firing time through approximately the remainder of the half cycle, where the gate coupling circuit conducts approximately no net average current to render and maintain the thyristor conductive.

US 2011/0193490 A1 discloses a dimmer adaptable to either two or three active wires includes a first full-wave rectifier across an AC power hot terminal and a dimmer hot terminal and a second full-wave rectifier across the AC power hot terminal and an AC power neutral terminal. The dimmer operates in a two-wire configuration by drawing power through a load when a control circuit is not conducting or in a three-wire configuration, when the AC power neutral terminal is connected, by drawing power from AC power hot and AC power neutral terminals. The dimmer operates according to a first set of preset dim levels when current is flowing through the first rectifier and according to a second set of preset dim levels when current is flowing through the second rectifier.

FR 2 952 766 A discloses an interrupter which has a voltage stabilizer connected to an output of an electronic switch. The stabilizer has an output for outputting stabilized voltage. An electrical energy storage unit is connected to the output of the stabilizer. The electronic switch is connected to an electronic control circuit by its control terminal. The electronic switch is controlled by a signal state in a correct direction so as to adopt a conductor or non-conductor state same as that of another electronic switch, in a charged state of the storage unit. The electrical energy storage unit comprises a cell, a battery, a capacitor or a supercapacitor.

US 2007/0001654 A1 discloses a power supply for a two-wire load control device supplies power to a microprocessor, which in turn controls the power supply. The power supply comprises an energy storage element, e.g., a capacitor, for producing a DC voltage for powering the microprocessor. The power supply comprises a high impedance circuit for allowing the energy storage element to receive energy at a first rate before the DC voltage is produced and the microprocessor is powered. The power supply further comprises a low-impedance circuit, i.e., a resistor in series electrical connection with a controllably conductive device, for allowing the energy storage element to receive energy at a second rate greater than the first rate. After starting up, the microprocessor is operable to selectively enable and disable the second energy-receiving circuit by rendering the controllably conductive device conductive and non-conductive, respectively. The microprocessor is operable to monitor the power supply and to control the amount of power delivered to an electrical load connected to the load control device in response to the monitoring of the power supply.

### SUMMARY

The invention discloses a single pole two-wire system phase control trailing edge light modulating circuit according to claim 1. Further features of the claimed circuit are disclosed in the dependent claims 2 to 5.

According to the invention, a full-bridge rectification circuit is adapted to convert an AC electrical supply into electrical supply of positive half cycle of a sine wave which is used as an input power supply for the power supply circuit, the voltage detection circuit and the active switch; and the power supply circuit is adapted to provide a stable DC working voltage to the light modulating control circuit and to the active switch in a linear voltage manner; whereas the light-modulating control circuit comprises a retriggerable dual monostable integrated circuit IC 4528 as the core, and the voltage detection circuit is adapted to produce a triggering signal for the light modulating circuit when the voltage of each input half cycle is lower than a preset voltage detection value; and upon receiving the trigger signal from the voltage detection circuit, the light modulating control circuit is adapted to generate first and second delayed signals simultaneously, with the first delay control signal controlling the conduction phase angle of the active switch and the second delay signal shielding the trigger signal generated by the voltage detection circuit so as to prevent a secondary trigger in one delay period; and the active switch, utilizing a field effect transistor as a switch, is adapted to switch on/off according to the first delay control signal of the light modulating control circuit to achieve control of a conduction phase angle of the electrical supply to the light-emitting load.

In a further embodiment, the bridge rectification circuit comprises a switch SW1, a fuse F1, a varistor RV1 and a bridge rectification diode BD1; wherein the SW1 has one end connected to the live wire of the mains supply and the other end connected to one end of the fuse F1, the other end of the fuse F1 is connected to one end of RV1 and one AC input terminal of BD1, the other end of RV1 and the other AC input terminal of BD1 are connected together and function as the output terminal of the two-wire system trailing edge dimming circuit.

In a further embodiment, the power supply circuit comprises a diode D1, a resistor R2, a resistor R3, a capacitor C9, a Zener diode ZD2, a field effect transistor Q1, and a capacitor C4; wherein D1 has its positive terminal connected to the positive output of the full-bridge rectification circuit and its negative terminal connected to one end of R2 and R3, the other end of R3 is connected to the drain of Q1, the other end of R2 is connected to the gate of Q1. ZD2 and C9 are connected in parallel. The positive terminal of ZD2, and the negative terminal of C4 are connected together to the negative output terminal of the bridge rectification circuit (1); the source of Q1 and the positive terminal of C4 are connected together and function as a positive output.

In a further embodiment, the voltage detection circuit comprises a resistor R9, a Zener diode ZD1, a resistor R13, a capacitor C6 and a transistor Q6; wherein R9 has one end connected to the positive output of the full-bridge rectification circuit and the other end connected to the negative end of ZD1, the positive end of ZD1 is connected to one end of R13, C6, and the base of Q6, the other end of R13 and C6 is connected to the emitter of Q6 and both of them are connected to the negative output of the full-bridge rectification circuit, the collector of Q6 is connected to the light-modulating control circuit.

In a further embodiment, the active switch comprises a field effect transistor Q4, a resistor R1, a transistor Q2, a transistor Q3, a resistor R11 and a resistor R7; wherein R1 has one end connected to the positive output of the power supply circuit and the other end connected to the collector of Q2, the emitter of Q2 is connected to the emitter of Q3, one end of R7, and the gate of Q4, the other end of R7 is connected to the collector of Q3 and the source of Q4 and both of them are connected to the negative output of the full-bridge rectification circuit, the drain of Q4 is connected to the positive output of the full-bridge rectification circuit, R11 has one end connected to the base of Q2 and the base of Q3 and the other end connected to the light-modulating control circuit.

The advantageous effects of the present utility model are as follows: simple installation due to only two wires being required for the light modulating circuit; wide application range for both resistive and capacitive load lamps, including capacitive load LED lamps, electronic spotlights, electronic ballast controlled fluorescent lamps, electronic energy-saving lamps; independency between the triggering circuit and the power supply circuit which avoids mutual restrictions and the influence for adjustment of maximum conduction phase angle; in addition, a linear voltage power supply has been used to simplify dimming control circuit.

### BRIEF DESCRIPTION OF THE DRAWINGS

Fig.1 is a block diagram showing the principle of the utility model.
Fig.2 is the principle diagram of one embodiment of the utility model.

### DETAILED DESCRIPTION

The technical solutions of the present utility model will be described in details through the following embodiments in connection the drawings.

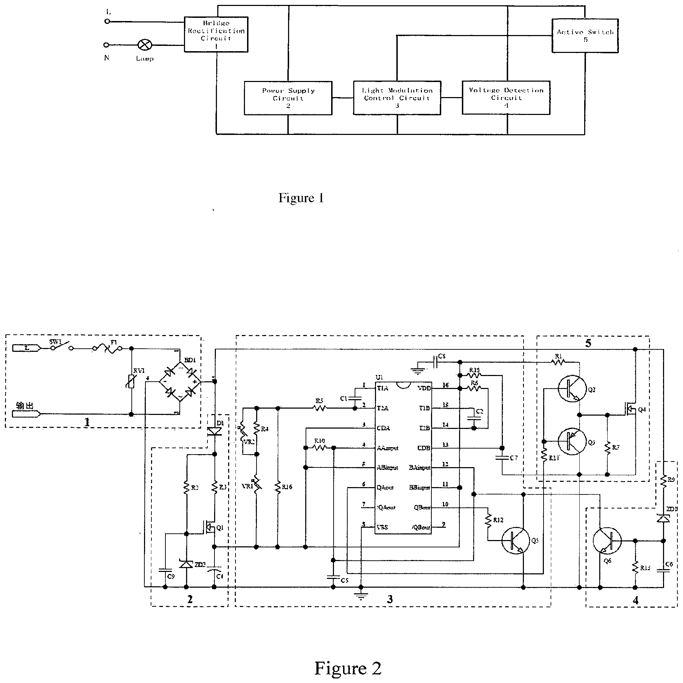

As shown in Fig. 1, a trailing edge (two-wire system) phase-controlled light modulating circuit according to the present invention comprises a full-bridge rectification circuit 1, a power supply circuit 2, a light-modulating control circuit 3, a voltage detection circuit 4 and an active switch 5. The full-bridge rectification circuit 1 has one input terminal connected to the live wire (L) and the other input terminal connected to a light-emitting load 6 which is further connected to the neutral wire (N). The power supply circuit 2, the voltage detection circuit 4 and the active switch 5 are all connected in parallel between the positive output terminal and the negative output terminal of the full-bridge rectification circuit 1. Three input terminals of the light-modulating control circuit 3 are connected to the negative output terminal of the full-bridge rectification circuit 1, the output terminal of the power supply circuit 2, and the output terminal of the voltage detection circuit 4, respectively, and the output terminal of the light-modulating control circuit 3 is connected to the input terminal of the active switch 5. The light-emitting load 6 in this embodiment can be either resistive and capacitive or a combination of resistive and capacitive loaded lamps, such as incandescent lamps, capacitive impedance LED lamps, electronic energy-saving lamps, electronic ballast controlled fluorescent lamps, electronic spotlights, etc..

The working principle of the present invention is as follows: The main AC electrical supply is converted, by the full-bridge rectification circuit 1, into electrical supply of positive half cycle of a sine wave which is used as the input power supply for the power supply circuit 2, the voltage detection circuit 4 and the active switch 5; the power supply circuit 2 provides a stable DC working voltage to the light modulating control circuit 3 and the active switch 5 in a linear voltage manner; the voltage detection circuit 4 will produce a triggering signal for the light modulating circuit 3 when the voltage of each input half cycle is lower than the preset voltage detection value; upon receiving the trigger signal from the voltage detection circuit 4, the light modulating control circuit 3 generates two delayed signals simultaneously, with one delay signal controlling the conduction phase angle of the active switch 5, and the other delay signal shielding the trigger signal which is generated by voltage detection circuit 4, so as to prevent a secondary trigger in one delay period; the active switch 5 controls the on/off action of according to to the control signal of the light modulating control circuit 3, and achieves the control of the electrical conduction phase angle.

The specific circuit diagram of the present utility model is shown in Fig.2. The full-bridge rectification circuit 1 is used to convert the input AC power into positive half cycle of sine wave to meet the power input requirement by the power supply circuit 2, the voltage detection circuit 4 and the active switch 5. In this embodiment, the full-bridge rectification circuit 1 comprises a switch SW1, a fuse F1, a varistor RV1 and a bridge rectification diode BD1. The switch SW1 has one end connected to the Live wire (L) of the mains supply and the other end connected to one end of the fuse F1, the other end of the fuse F1 is connected to one end of the RV1 and one AC input terminal of the bridge rectification diode BD1, the other end of the RV1 and the other AC input terminal of the bridge rectification diode BD1 are connected together and function as the output terminal of the single pole (two-wire system) trailing edge light modulating circuit. The positive and negative terminals of the bridge rectification diode BD1 function as the positive and negative output terminals of the full-bridge rectification circuit 1, respectively. After passed through the full bridge rectification circuit 1, the AC power is output as the positive half cycle of a sine wave between the positive end and the negative end of the bridge rectification diode BD1.

The power supply circuit 2 functions to provide a stable working voltage for the light modulating control circuit 3 and the active switch 5 in a linear voltage manner. In this embodiment, the power supply circuit 2 comprises a diode D1, a resistor R2, a resistor R3, a capacitor C9, a Zener diode ZD2, a field effect transistor Q1, and a capacitor C4. The diode D1 has its positive terminal connected to the positive output of the full-bridge rectification circuit 1 and its negative terminal connected to one end of the resistors R2 and R3, the other end of the resistor R3 is connected to the drain of the field effect transistor Q1, the other end of the resistor R2 is connected to the gate of the field effect transistor Q1, the negative terminal of the Zener diode ZD2, and one end of the capacitor C9, the other end of the capacitor C9, the positive terminal of the Zener diode ZD2, and the negative terminal of the capacitor C4 are connected together to the negative output terminal of the full-bridge rectification circuit 1; the source of the field effect transistor Q1 and the positive terminal of the capacitor C4 are connected together and function as a positive output. With the Zener diode ZD2 on the gate of the field effect transistor Q1, the voltage across the capacitor C4 is stabilized at (Vzd2-Vgs). Due to the unidirectional conduction characteristics of the diode D1, C4 is prevented from discharging when the output voltage of the full-bridge rectification circuit 1 is lower than the voltage across the capacitor C4, thus the voltage stability of C4 is improved.

In this embodiment, the light modulating control circuit 3 comprise a retriggerable dual monostable IC 4528 (U1) as the core, and two retriggerable monostable circuits A and B. The monostable circuit A comprises an adjustable resistor VR1, an adjustable resistor VR2, a resistor R4, a resistor R5, a resistor R16, and a capacitor C1, and functions to set the delay time of the conduction phase angle, wherein VR1 has one end connected to the positive output of the power supply circuit 2 and the other end connected to one end of the parallel VR2 and R4, the other end of the parallel VR2 and R4 is connected to the pin 2 of Ul via R5, R16 is connected in parallel with the circuit composed of VR1, VR2 and R4, C1 is connected between the pin 1 and pin 2 of Ul. VR1 can be modulated to adjust the conduction phase angle, VR2 and R4 are used to set the minimum conduction phase angle, R5 and R16 are used to set the maximum conduction phase angle, and the positive output end of the monostable circuit A drives the active switch 5. The other monostable circuit B comprises a resistor R6 and a capacitor C2 and functions to set time for preventing the delay signal from being triggered for a second time, wherein R6 is connected between pin 14 and pin 16 of U1, C2 is connected between pin 14 and pin 15 of U1, and the positive output end of the monostable circuit B is reversed by the transistor Q5 and then pulls down the level of the trigger input of the trigger A, so as to prevent secondary trigger in one delay period.

The voltage detection circuit 4 generates a triggering signal for the light modulating control circuit 3 when the output voltage of the full-bridge rectification circuit 1 is below a certain voltage value. In this embodiment, the voltage detection circuit 4 comprises a resistor R9, a Zener diode ZD1, a resistor R13, a capacitor C6, and a transistor Q6. R9 has one end connected to the positive output of the full-bridge rectification circuit 1 and the other end connected to the negative end of ZD1; the positive end of ZD1 is connected to one end of R13, C6, and the base of Q6; the other end of R13 and C6 is connected to the emitter of Q6 and both of them are connected to the negative output of the full-bridge rectification circuit 1; the collector of Q6 is connected to the light-modulating control circuit 3. The output voltage of the full-bridge rectification circuit 1 is divided by R9, ZD1 and R13, and when a divided voltage is lower than the conduction voltage of the transistor Q6, the Q6 is cut-off and generates a rising-edge trigger signal for the light modulating control circuit 3.

The active switch 5 utilizes a field effect transistor as a switch and switches on/off in response to the control signal of the light modulating control circuit 3 to achieve the control on conduction phase angle of the electrical supply to the electrical load. In this embodiment, the active switch 5 comprises a field effect transistor Q4, a resistor R1, a transistor Q2, a transistor Q3, a resistor R11, and a resistor R7. R1 has one end connected to the positive output of the power supply circuit 2 and the other end connected to the collector of Q2; the emitter of Q2 is connected to the emitter of Q3, one end of R7, and the gate of Q4; the other end of R7 is connected to the collector of Q3 and the source of Q4 and both of them are connected to the negative output of the full-bridge rectification circuit 1; the drain of Q4 is connected to the positive output of the full-bridge rectification circuit 1; R11 has one end connected to the base of Q2 and the base of Q3 and the other end connected to the light-modulating control circuit 3. Q2 and Q3 forms a driving circuit for Q4 to activate and accerate the switching speed of Q4.

## Claims

1. A single pole two-wire system phase control trailing edge light modulating circuit, comprising:
a full-bridge rectification circuit (1),
a power supply circuit (2),
a light-modulating control circuit (3),
a voltage detection circuit (4) and
an active switch (5);
wherein the full-bridge rectification circuit (1) has one input terminal connected to a live wire (L) and the other input terminal connected to a light-emitting load (6) which is further connected to a neutral wire (N);
the power supply circuit (2), the voltage detection circuit (4) and the active switch (5) are all connected in parallel between a positive output terminal and a negative output terminal of the full-bridge rectification circuit (1);
three inputs of the light-modulating control circuit (3) are connected to the negative output terminal of the full-bridge rectification circuit (1), to an output terminal of the power supply circuit (2), and to an output terminal of the voltage detection circuit (4), respectively; and
an output terminal of the light-modulating control circuit (3) is connected to the input terminal of the active switch (5),
**characterized in that**
the full-bridge rectification circuit (1) is adapted to convert an AC electrical supply into electrical supply of positive half cycle of a sine wave which is used as an input power supply for the power supply circuit (2), the voltage detection circuit (4) and the active switch (5);
the power supply circuit (2) is adapted to provide a stable DC working voltage to the light modulating control circuit (3) and to the active switch (5) in a linear voltage manner;
the light-modulating control circuit (3) comprises a retriggerable dual monostable integrated circuit IC 4528 as the core,
the voltage detection circuit (4) is adapted to produce a triggering signal for the light modulating circuit (3) when the voltage of each input half cycle is lower than a preset voltage detection value;
upon receiving the trigger signal from the voltage detection circuit (4), the light modulating control circuit (3) is adapted to generate first and second delayed signals simultaneously, with the first delay control signal controlling the conduction phase angle of the active switch (5) and the second delay signal shielding the trigger signal generated by the voltage detection circuit (4) so as to prevent a secondary trigger in one delay period; and
the active switch (5), utilizing a field effect transistor (Q4) as a switch, is adapted to switch on/off according to the first delay control signal of the light modulating control circuit (3) to achieve control of a conduction phase angle of the electrical supply to the light-emitting load (6).

2. The single pole (two-wire system) phase control trailing edge light modulating circuit according to claim 1,
**characterized in that**
the full-bridge rectification circuit (1) comprises a switch SW1, a fuse F1, a varistor RV1 and a bridge rectification diode BD1; wherein the SW1 has one end connected to the Live wire of the mains supply and the other end connected to one end of F1, the other end of F1 is connected to one end of RV1 and one AC input terminal of BD1, the other end of RV1 and the other AC input terminal of BD1 are connected together and function as the output terminal of the single pole (two-wire system) phased controlled trailing edge light modulating circuit; the positive and negative terminals of BD1 function as the positive and negative output terminals of the full-bridge rectification circuit (1), respectively.

3. The single pole (two-wire system) phase control trailing edge light modulating circuit according to claim 1,
**characterized in that**
the power supply circuit (2) comprises a diode D1, a resistor R2, a resistor R3, a capacitor C9, a Zener diode ZD2, a field effect transistor Q1, and a capacitor C4; wherein D1 has its positive terminal connected to the positive output of the full-bridge rectification circuit (1) and its negative terminal connected to one end of R2 and R3, the other end of R3 is connected to the drain of Q1, the other end of R2 is connected to the gate of Q1, the negative terminal of ZD2, and one end of C9, the other end of C9, the positive terminal of ZD2, and the negative terminal of C4 are connected together to the negative output terminal of the full-bridge rectification circuit (1); the source of Q1 and the positive terminal of C4 are connected together and function as a positive output.

4. The single pole (two-wire system) phase control trailing edge light modulating circuit according to claim 1,
**characterized in that**
the voltage detection circuit (4) comprises a resistor R9, a Zener diode ZD1, a resistor R13, a capacitor C6 and a transistor Q6; wherein R9 has one end connected to the positive output of the full-bridge rectification circuit (1) and the other end connected to the negative end of ZD1, the positive end of ZD1 is connected to one end of R13, C6, and the base of Q6, the other end of R13 and C6 is connected to the emitter of Q6 and both of them are connected to the negative output of the full-bridge rectification circuit (1), the collector of Q6 is connected to the light-modulating control circuit (3).

5. The single pole (two-wire system) phase control trailing edge light modulating circuit according to claim 1,
**characterized in that**
the active switch (5) comprises a field effect transistor Q4, a resistor R1, a transistor Q2, a transistor Q3, a resistor R11 and a resistor R7; wherein R1 has one end connected to the positive output of the power supply circuit (2) and the other end connected to the collector of Q2, the emitter of Q2 is connected to the emitter of Q3, one end of R7, and the gate of Q4, the other end of R7 is connected to the collector of Q3 and the source of Q4 and both of them are connected to the negative output of the full-bridge rectification circuit (1), the drain of Q4 is connected to the positive output of the full-bridge rectification circuit (1), R11 has one end connected to the base of Q2 and the base of Q3 and the other end connected to the light-modulating control circuit (3).

## Patentansprüche

1. Einpoliges zwei-Drahtsystem mit phasengesteuerter Austrittskanten-Lichtmodulationsschaltung, umfassend:
eine Vollbrücken-Gleichrichtungsschaltung (1),
eine Stromversorgungsschaltung (2),
eine Lichtmodulations-Steuerschaltung (3),
eine Spannungsdetektionsschaltung (4) und
einen aktiven Schalter (5);
wobei die Vollbrücken-Gleichrichtungsschaltung (1) einen Eingangsanschluss aufweist, der mit einem stromführenden Kabel (L) verbunden ist, und der andere Eingangsanschluss mit einer lichtemittierenden Last (6) verbunden ist, die außerdem mit einem Nullleiter (N) verbunden ist;
die Stromversorgungsschaltung (2), die Spannungsdetektionsschaltung (4) und der aktive Schalter (5) allesamt zwischen einem positiven Ausgangssanschluss und einem negativen Ausgangssanschluss der Vollbrücken-Gleichrichtungsschaltung (1) parallel geschaltet sind;
drei Eingänge der Lichtmodulations-Steuerschaltung (3) mit dem negativen Ausgangsanschluss der Vollbrücken-Gleichrichtungsschaltung (1), mit einem Ausgangsanschluss der Stromversorgungsschaltung (2) bzw. mit einem Ausgangsanschluss der Spannungsdetektionsschaltung (4)
verbunden sind; und
ein Ausgangsanschluss der Lichtmodulations-Steuerschaltung (3) mit dem Eingangsanschluss des aktiven Schalters (5) verbunden ist,
**dadurch gekennzeichnet, dass**
die Vollbrücken-Gleichrichtungsschaltung (1) ausgebildet ist, um eine AC-Stromversorgung in eine Stromversorgung einer positiven Halbperiode einer Sinuswelle umzuwandeln, die als Eingangsstromversorgung für die Stromversorgungsschaltung (2), die Spannungsdetektionsschaltung (4) und den aktiven Schalter (5) verwendet wird;
die Stromversorgungsschaltung (2) ausgebildet ist, um der Lichtmodulations-Steuerschaltung (3) und dem aktiven Schalter (5) eine stabile DC-Betriebsspannung als lineare Spannung bereitzustellen;
die Lichtmodulations-Steuerschaltung (3) einen nachtriggerbaren, dualen, monostabilen integrierten Schaltkreis IC 4528 als Kern umfasst,
die Spannungsdetektionsschaltung (4) ausgebildet ist, um ein Auslösesignal für die Lichtmodulations-Schaltung (3) zu erzeugen, wenn die Spannung jeder Eingangs-Halbwelle niedriger ist als ein voreingestellter Spannungsdetektionswert;
bei Empfang des Auslösesignals von der
Spannungsdetektionsschaltung (4) die Lichtmodulations-Steuerschaltung (3) ausgebildet ist, um gleichzeitig erste und zweite verzögerte Signale zu erzeugen, wobei das erste verzögerte Steuersignal den Leitungsphasenwinkel des aktiven Schalters (5) steuert und das zweite verzögerte Signal das Auslösesignal, das von der Spannungsdetektionsschaltung (4) erzeugt wird, abschirmt, um in einer Verzögerungsperiode einen zweiten Auslöser zu verhindern; und
der aktive Schalter (5), der einen Feldeffekttransistor (Q4) als Schalter verwendet, ausgebildet ist, um gemäß dem ersten verzögerten Steuersignal der Lichtmodulations-Steuerschaltung (3) ein- und auszuschalten, um einen Leitungsphasenwinkel der Stromversorgung zur lichtemittierenden Last (6) zu steuern.

2. Einpoliges (zwei-Drahtsystem) mit phasengesteuerter Austrittskanten-Lichtmodulationsschaltung nach Anspruch 1,
**dadurch gekennzeichnet, dass**
die Vollbrücken-Gleichrichtungsschaltung (1) einen Schalter SW1, eine Sicherung F1, einen Varistor RV1 und eine Brückengleichrichtungsdiode BD1 umfasst; wobei ein Ende des SW1 mit dem stromführenden Kabel des Netzanschlusses verbunden ist und das andere Ende mit einem Ende der F1 verbunden ist, wobei das andere Ende der F1 mit einem Ende des RV1 und einem AC-Eingangsanschluss der BD1 verbunden ist, wobei das andere Ende des RV1 und der andere AC-Eingangsanschluss der BD1 miteinander verbunden sind und als Ausgangsanschluss des einpoligen (zwei-Drahtsystems) mit phasengesteuerter Austrittskanten-Lichtmodulationsschaltung fungieren; der positive und der negative Anschluss der BD1 als der positive bzw. negative Ausgangsanschluss der Vollbrücken-Gleichrichtungsschaltung (1) fungieren.

3. Einpoliges (zwei-Drahtsystem) mit phasengesteuerter Austrittskanten-Lichtmodulationsschaltung nach Anspruch 1,
**dadurch gekennzeichnet, dass**
die Stromversorgungsschaltung (2) eine Diode D1, einen Widerstand R2, einen Widerstand R3, einen Kondensator C9, eine Zener-Diode ZD2, einen Feldeffekttransistor Q1 und einen Kondensator C4 umfasst; wobei der positive Anschluss der D1 mit dem positiven Ausgang der Vollbrücken-Gleichrichtungsschaltung (1) verbunden ist und ihr negativer Anschluss mit einem Ende des R2 und R3 verbunden sind, wobei das andere Ende des R3 mit dem Drain von Q1 verbunden ist, das andere Ende des R2 mit dem Gate von Q1 verbunden ist, der negative Anschluss der ZD2 und ein Ende von C9, das andere Ende von C9, der positive Anschluss der ZD2 und der negative Anschluss von C4 zusammen mit dem negativen Ausgangssanschluss der Vollbrücken-Gleichrichtungsschaltung (1) verbunden sind; die Source von Q1 und der positive Anschluss von C4 miteinander verbunden sind und als positiver Ausgang fungieren.

4. Einpoliges (zwei-Drahtsystem) mit phasengesteuerter Austrittskanten-Lichtmodulationsschaltung nach Anspruch 1,
**dadurch gekennzeichnet, dass**
die Spannungsdetektionsschaltung (4) einen Widerstand R9, eine Zener-Diode ZD1, einen Widerstand R13, einen Kondensator C6 und einen Transistor Q6 umfasst, wobei ein Ende von R9 mit dem positiven Ausgang der Vollbrücken-Gleichrichtungsschaltung (1) verbunden ist und das andere Ende mit dem negativen Ende der ZD1 verbunden ist, das positive Ende der ZD1 mit einem Ende von R13, C6 und dem Körper von Q6 verbunden ist, das andere Ende von R13 und C6 mit dem Emitter von Q6 verbunden ist, und beide zusammen mit dem negativen Ausgang der Vollbrücken-Gleichrichtungsschaltung (1) verbunden sind, der Kollektor von Q6 mit der Lichtmodulations-Steuerschaltung (3) verbunden ist.

5. Einpoliges (zwei-Drahtsystem) mit phasengesteuerter Austrittskanten-Lichtmodulationsschaltung nach Anspruch 1,
**dadurch gekennzeichnet, dass**
der aktive Schalter (5) einen Feldeffekttransistor Q4, einen Widerstand R1, einen Transistor Q2, einen Transistor Q3, einen Widerstand R11 und einen Widerstand R7 umfasst, wobei ein Ende von R1 mit dem positiven Ausgang der Stromversorgungsschaltung (2) verbunden ist und das andere Ende mit dem Kollektor von Q2 verbunden ist, der Emitter von Q2 mit dem Emitter von Q3, einem Ende von R7 und dem Gate von Q4 verbunden ist, das andere Ende von R7 mit dem Kollektor von Q3 und der Source von Q4 verbunden ist und beide mit dem negativen Ausgang der Vollbrücken-Gleichrichtungsschaltung (1) verbunden sind, der Drain von Q4 mit dem positiven Ausgang der Vollbrücken-Gleichrichtungsschaltung (1) verbunden ist, ein Ende von R11 mit dem Körper von Q2 verbunden ist und der Körper von Q3 und das andere Ende mit der Lichtmodulations-Steuerschaltung (3) verbunden sind.

## Revendications

1. Circuit de modulation de lumière commandé en phase de bord de fuite, à pôle unique (système bifilaire) comportant:
un circuit de redressement plein pont (1),
un circuit d'alimentation électrique (2),
un circuit de commande de modulation de lumière (3),
un circuit de détection de tension (4) et
un commutateur actif (5),
le circuit de redressement plein pont (1) ayant un terminal d'entrée relié à un fil sous tension (L) et l'autre terminal d'entrée relié à une charge électroluminescente (6) qui est en outre reliée à un fil neutre (N);
le circuit d'alimentation électrique (2), le circuit de détection de tension (4) et le commutateur actif (5) étant tous reliés en parallèle entre un terminal de sortie positive et un terminal de sortie négative du circuit de redressement plein pont (1);
trois entrées du circuit de commande de modulation de lumière (3) étant reliés au terminal de sortie négative du circuit de redressement plein pont (1), à un terminal de sortie du circuit d'alimentation électrique (2) et respectivement à un terminal de sortie du circuit de détection de tension (4); et
un terminal de sortie du circuit de commande de modulation de lumière (3) étant relié au terminal d'entrée du commutateur actif (5),
**caractérisé en ce que**
le circuit de redressement plein pont (1) est adapté pour convertir une alimentation électrique CA en une alimentation électrique d'un demi-cycle positif d'une onde *sinusoïdale* qui est utilisé comme alimentation électrique d'entrée pour le circuit d'alimentation électrique (2), le circuit de détection de tension (4) et le commutateur actif (5);
le circuit d'alimentation électrique (2) est adapté pour fournir une tension stable de fonctionnement CC au circuit de commande de modulation de lumière (3) et au commutateur actif (5) en tant que tension linéaire;
le circuit de commande de modulation de lumière (3) comporte un circuit intégré 4528 redéclenchable duale monostable comme noyau, le circuit de détection de tension (4) est adapté pour produire un signal de déclenchement pour le circuit de modulation de lumière (3) lorsque la tension de chaque demi-cycle d'entrée est inférieure à une valeur de détection de tension prédéterminée;
à la réception du signal de déclenchement du circuit de détection de tension (4), le circuit de commande de modulation de lumière (3) est adapté pour générer simultanément des premiers et seconds signaux retardés, le premier signal de commande de retard commandant l'angle de phase de conduction du commutateur actif (5) et le second signal de retard blindant le signal de déclenchement généré par le circuit de détection de tension (4) afin d'empêcher un déclencheur secondaire dans une période de retard; et
le commutateur actif (5) utilisant un transistor à effet de champ (Q4) comme commutateur est adapté pour activer et désactiver selon le premier signal de commande de retard du circuit de commande de modulation de lumière (3) pour obtenir la commande d'un angle de phase de conduction de l'alimentation électrique à la charge électroluminescente (6).

2. Circuit de modulation de lumière commandé en phase de bord de fuite, à pôle unique (système bifilaire) selon la revendication 1,
**caractérisé en ce que**
le circuit de redressement plein pont (1) comporte un commutateur SW1, un fusible F1, un varistor RV1 et une diode de redressement de pont BD1; le SW1 ayant une extrémité reliée au fil sous tension de l'alimentation secteur et l'autre extrémité reliée à une extrémité du F1, l'autre extrémité du F1 étant reliée à une extrémité du RV1 et un terminal d'entrée CA de la BD1, l'autre extrémité du RV1 et l'autre terminal d'entrée CA de la BD1 étant reliés entre eux et font office de terminal de sortie du circuit de modulation de lumière commandé en phase de bord de fuite, à pôle unique (système bifilaire); les terminaux positifs et négatifs de la BD1 faisant office de terminaux de sortie positive et négative du circuit de redressement plein pont (1) respectivement.

3. Circuit de modulation de lumière commandé en phase de bord de fuite, à pôle unique (système bifilaire) selon la revendication 1,
**caractérisé en ce que**
le circuit d'alimentation électrique (2) comporte une diode D1, une résistance R2, une résistance R3, un condensateur C9, une diode Zener ZD2, un transistor à effet de champ Q1 et un condensateur C4; la D1 ayant son terminal positif relié à la sortie positive du circuit de redressement plein pont (1) et son terminal négatif relié à une extrémité de la R2 et R3, l'autre extrémité de la R3 étant reliée au drain du Q1, l'autre extrémité de la R2 étant reliée à la grille du Q1, le terminal négatif de la ZD2 et une extrémité du C9, l'autre extrémité du C9, le terminal positif de la ZD2 et le terminal négatif du C4 étant reliée entre eux au terminal de sortie négative du circuit de redressement plein pont (1); la source du Q1 et le terminal positif du C4 étant reliés entre eux et font office de sortie positive.

4. Circuit de modulation de lumière commandé en phase de bord de fuite, à pôle unique (système bifilaire) selon la revendication 1,
**caractérisé en ce que**
le circuit de détection de tension (4) comporte une résistance R9, une diode Zener ZD1, une résistance R13, un condensateur C6 et un transistor Q6, la R9 ayant une extrémité reliée à la sortie positive du circuit de redressement plein pont (1) et l'autre extrémité reliée à l'extrémité négative de la ZD1, l'extrémité positive de la ZD1 étant reliée à une extrémité de R13, C6, et le corps du Q6, l'autre extrémité de la R13 et le C6 étant reliés à l'émetteur du Q6 et tous les deux étant reliés à la sortie négative du circuit de redressement plein pont (1), le collecteur du Q6 étant relié au circuit de commande de modulation de lumière (3).

5. Circuit de modulation de lumière commandé en phase de bord de fuite, à pôle unique (système bifilaire) selon la revendication 1,
**caractérisé en ce que**
le commutateur actif (5) comporte un transistor à effet de champ Q4, une résistance R1, un transistor Q2, un transistor Q3, une résistance R11 et une résistance R7, la R1 ayant une extrémité reliée à la sortie positive du circuit d'alimentation électrique (2) et l'autre extrémité reliée au collecteur du Q2, l'émetteur du Q2 étant relié à l'émetteur du Q3, une extrémité de la R7 et la grille du Q4, l'autre extrémité de la R7 étant reliée au collecteur du Q3 et la source du Q4 et tous les deux étant reliés à la sortie négative du circuit de redressement plein pont (1), le drain du Q4 étant relié à la sortie positive du circuit de redressement plein pont (1), la R11 ayant une extrémité reliée au corps du Q2 et le corps du Q3 et l'autre extrémité étant reliés au circuit de commande de modulation de lumière (3).
